# EUROPEAN PATENT APPLICATION

(11) **EP 2 107 046 A2**
(43) Date of publication of application: **07.10.2009**
(21) Application number: 09156649.7
(22) Date of filing: 30.03.2009
(51) Int. Cl.: C04B 38/00, B01D 46/24, C04B 35/195

(54) **Porous honeycomb structure body and method of manufacturing the same**

(30) Priority: 31.03.2008 JP 2008090393; 17.12.2008 JP 2008320699
(71) Applicant: DENSO CORPORATION, Kariya-city, Aichi-pref., 448-8661 (JP)
(72) Inventor: Sugiyama, Tomio, Kariya-city Aichi 448-8661 (JP); Ishihara, Mikio, Kariya-city Aichi 448-8661 (JP); Saitoh, Makoto, Kariya-city Aichi 448-8661 (JP); Betsushiyo, Takahiro, Kariya-city Aichi 448-8661 (JP)
(74) Representative: TBK-Patent

(57) **Abstract**

A porous honeycomb structure body, having honeycomb shaped cell walls and a large number of cells surrounded with the honeycomb shaped cell walls, and a related manufacturing method are disclosed. The cell walls have a principal composition of cordierite in a chemical composition of 45-55 % by weight of SiO₂, 33-42 % by weight of Al₂O₃ and 12-18 % by weight of MgO. The cell walls have fine pores formed in a distribution under which a fine pore bulk, having pore diameters of 5µm or less, is less than 15% of an entire pore bulk and a fine pore bulk, having pore diameters exceeding 25µm, is less than 10% of the entire pore bulk. The porous honeycomb structure body has porosity ranging from 40 to 60% and has a thermal expansion coefficient of 0.7 × 10⁻⁶/°C or less at temperatures ranging from 40 to 800°C.

## Description

### BACKGROUND OF THE INVENTION

### 1. Technical Field of the Invention

The present invention relates to a honeycomb structure body made of cordierite-forming material for use in a filter to capture particulates in the form of particulate matter having a composition of carbon exhausted from a diesel engine and a method of manufacturing the same.

### 2. Description of the Related Art

For the purpose of capturing particulates exhausted from a diesel engine, a filter, composed of a honeycomb structure body made of cordierite-forming material, has been widely in use. The honeycomb structure body of the related art has a cylindrical column shape having a longitudinal direction along which a large number of introduction passages and discharge passages are formed.

The introduction passages are opened at exhaust gas inlets and closed at outlets plugged with plugging material. Further, the introduction passages and the discharge passages are alternately formed in a so-called checker design pattern in longitudinal and lateral directions. In addition, partition walls, forming the introduction passages and the discharge passages, are porous in structure and formed with a large number of fine pores.

Next, when capturing the particulates with the filters employing the honeycomb structure body of the related art, first, exhaust gases, containing the particulates, enter the introduction passages. When this takes place, the partition walls capture the particulates in exhaust gases, thereby purifying exhaust gases. Thereafter, purified exhaust gases are discharged from open ends of the discharge passages.

Filters, employing such a honeycomb structure body, have capturing efficiencies and pressure losses, etc., with performances different from each other depending on structures of the partition walls especially in diameter of fine pores formed in the partition walls each defined between adjacent through-bores. Thus, it has been required to form walls of the filters in a controlled pore distribution pattern.

In the related art, the porous honeycomb filters are made of silicon carbide with excellent heat resistance with a capability of easily controlling a pore diameter. However, the porous honeycomb filters need to be subjected to firing under a specified atmosphere. In addition, it is difficult to fabricate a large sized integrated filter. This results in the occurrence of issues with a need arising in fabricating a large number of segmented small blocks that are bonded to each other to form a unified filter after which the unified filter needs to be shaped in a cylindrical structure with a resultant increase in cost.

In contrast, the porous honeycomb filters, made of cordierite, have no need to be fired under the specified atmosphere. Further, a largely sized integrated filter can be easily fabricated with increased cost performance. In addition to such advantages, thermal expansion coefficient can be controlled at a low level and the environment of usage has excellent stability. Recently development of the porous honeycomb filter made of cordierite has been increasing because of those advantages.

Patent Publication 1 (Japanese Patent Application Publication No. 9-77573) discloses a honeycomb filter, such as the filter described above, which is obtained in a manufacturing method with an average pore diameter ranging from 25 to 40µm upon employing a cordierite-forming material that does not contain kaolin and aluminum oxide with a view to having increased porosity. The cordierite raw material includes aluminum hydroxide (containing a powder with particle diameters ranging from 0.5 to 3µm and a powder with particle diameters ranging from 5 to 15µm in a sum of 50 to 100% of a whole of aluminum hydroxide) with particle diameters being controlled in a specified range, molten silica (having an average particle diameter ranging from 30 to 100µm) and talc to which given organic foaming agent or combustible substance are added. However, with such a honeycomb filter, pore diameters are controlled mainly by aluminum hydroxide, organic foaming agent or combustible substance with the resultant average pore diameter formed in a large size. Thus, particulates tend to escape through these fine pores with a serious drop in capturing efficiency.

Further, Patent Publication 2 (Japanese Patent Application Publication No. 2002-219319) discloses a porous honeycomb filter and a related manufacturing method. The porous honeycomb filter is made of material having a principal crystal phase composed of cordierite having a controlled fine pore distribution. The fine pore distribution has features including: a fine pore bulk with a pore diameter less than 10µm falling in a value of 15% or less of a entire pore bulk; a fine pore bulk with a pore diameter less than 10 to 50µm falling in a value of 75% or more of the entire pore bulk; and a fine pore bulk with a pore diameter exceeding 50µm falling in a value of 10% or less of the entire pore bulk.

However, with a progress of significant technical innovations on improvements of diesel engines and fuel injection systems, exhaust gases emitted from these diesel engines contain particulate matter formed in microparticulated structures due to an effort of achieving emission reduction. Thus, it has been strongly demanded to provide a honeycomb filter with a structure in which a pore diameter is controlled at extremely high level. On the contrary to such demand, the honeycomb filter of the related art has an issue of a difficulty occurring in completely capturing the microparticulated particulates.

### SUMMARY OF THE INVENTION

The present invention has been completed with the above view in mind and has an object to provide a porous honeycomb structure body having increased efficiency of capturing particulate matter (Particulate Matter: PM or particulate) while preventing a pressure loss or the like from increasing due to the clogging of fine pores and a method of manufacturing the same.

To achieve the above object, a first aspect of the present invention provides a porous honeycomb structure body having honeycomb shaped cell walls and a large number of cells surrounded with the honeycomb shaped cell walls, characterized in that: the cell walls have a principal composition of cordierite composed of 45-55 % by weight of SiO₂, 33-42 % by weight of Al₂O₃ and 12-18 % by weight of MgO; and the cell walls have fine pores formed in a distribution in which the proportion of pores having diameter of 5µm or less, is less than 15% of the total pores, and a fine pore bulk, having pore diameters exceeding 25µm, is less than 10% of the entire pore bulk.

With the porous honeycomb structure body of the present invention, the cell walls are formed in a pore distribution limited in a specified range. This results in an increased efficiency of capturing particular matter or the like, while preventing the pressure loss from increasing due to the clogging of the fine pores.

With a view to capturing the microparticulated particulates at high efficiency, it is effective for the porous honeycomb structure body not to have coarse pores, through which the particulates easily escape, while having fine pores with a minimized diameter. Thus, selecting a bulk of fine pores, exceeding a pore diameter of 25µm, to be less than 10% of an entire pore bulk enables the porous honeycomb structure body to have high capturing efficiency.

As set forth above, further, the pores may be preferably formed in a minimized diameter for increased capturing efficiency to be obtained. However, the fine pores suffer an issue caused by the clogging of the fine pores due to the formation of a catalyst layer with an increase in pressure loss. Therefore, with a pore bulk of a pore diameter of 5µm or less selected to be less than 15% of the entire pore bulk, it becomes possible to prevent pressure loss due to the clogging of the fine pores from increasing.

That is, controlling the pore distribution so as to allow a percentage of the fine pores with the pore diameters falling in a narrow range from 5 to 25µm to lie at an extremely high rate results in a capability of capturing the microparticulated particulates, while making it possible to suppress the occurrence of defects such as the pressure loss and the clogging.

With the present invention, therefore, it becomes possible to provide a porous honeycomb structure body having increased efficiency of capturing particulate matter or the like while preventing a pressure loss from increasing due to the clogging of fine pores.

Another aspect of the present invention provides a method of manufacturing the porous honeycomb structure body recited in the first aspect of the present invention, the method characterized by the steps of extrusion molding cordierite-forming material to form the honeycomb structure body, drying the honeycomb structure body, and firing the honeycomb structure body. The cordierite-forming material has a principal composition of talc, molten silica and aluminum hydroxide; a sum of cumulative frequencies of talc in fine particles of 8.7µm or less and molten silica in fine particles of 8.7µm or less, measured with a particle size distribution analyzer, is 15% or less; and a sum of a cumulative frequency of talc in coarse particles of 31.3µm or more and the percentage of molten silica in coarse particles of 31.3µm or more is 10% or less.

Another aspect of the present invention provides a method of manufacturing the porous honeycomb structure body recited in the first aspect of the present invention, the method characterized by the steps of extrusion molding cordierite-forming material to form the honeycomb structure body, drying the honeycomb structure body, and firing the honeycomb structure body. The cordierite-forming material has a principal composition of talc, molten silica and aluminum hydroxide; a sum of cumulative frequencies of talc in fine particles of 8.7µm or less and molten silica in fine particles of 6.25µm or less, measured with a particle size distribution analyzer, is 15% or less; and a sum of a cumulative frequency of talc in coarse particles of 43.8µm or more and the percentage of molten silica in coarse particles of 31.3µm or more is 10% or less.

In order to obtain the porous honeycomb structure body according to the first aspect of the present invention, there is a need to control the formation of fine pores during a manufacturing process.

Upon analyzing a pore forming mechanism having a composition selected from talc, molten silica and aluminum hydroxide as cordierite-forming material, it has turned out that the cell walls of the porous honeycomb structure body have a porosity determined based on a volume percentage of aluminum hydroxide and the pore diameter is determined with particle diameters of talc and silica.

Further, it has been found that the pore diameter distribution can be controlled in a desired range at increased precision by optimizing the pore diameters in consideration of contraction percentages of silica and talc.

Therefore, conducting the molding step, the drying step and the firing steps using the specified cordierite-forming material described above enables the cell walls to be formed with the fine pores with the pore diameter falling in a narrow range of 5 to 25µm at an extremely high rate. This makes it possible to manufacture a porous honeycomb structure body having increased capturing efficiency with no occurrence of an increase in pressure loss due to the clogging of fine pores.

According to the present invention, thus, it is possible to manufacture a porous honeycomb structure body having increased efficiency of capturing particulates or the like while preventing a pressure loss from increasing due to the clogging of fine pores.

Further, in the related art, kaolin and alumina have been employed to form a skeleton section with a relatively less number of pores. With the manufacturing method set forth above, talc, molten silica and aluminum hydroxide are employed as base materials. Crystal water, contained in aluminum hydroxide, is caused to evaporate, resulting in the formation of a large number of pores in aluminum hydroxide. In addition, molten silica and talc are decomposed during the firing step with the occurrence of a volume contraction, resulting in the formation of pores in contracted areas. Therefore, the present invention makes it possible to form the skeleton section in a further porous structure than that achieved with the manufacturing method of the prior art.

### BRIEF DESCRIPTION OF THE DRAWINGS

FIG. 1 is a perspective view showing a porous honeycomb structure body of one embodiment according to the present invention.
FIG. 2 is a graph showing a pore diameter distribution (in a curve A) of fine pores formed in cell walls of test piece E7 and a pore diameter distribution (in a curve B) of fine pores formed in cell walls of another test piece prepared by a method simulated on a technology of the related art disclosed in Patent Publication 1.
FIG. 3A is a drawing substitute photograph showing a microstructure of the porous honeycomb structure body of the test piece E7.
FIG. 3B is a drawing substitute photograph showing a microstructure of the porous honeycomb structure body of the test piece prepared by the method simulated on the technology of the related art disclosed in Patent Publication 1.

### DETAILED DESCRIPTION OF PREFERRED EMBODIMENTS

Now, a porous honeycomb structure body and a related manufacturing method of one embodiment according to the present invention are described below in detail with reference to the accompanying drawings. However, the present invention is construed not to be limited to such embodiment described below and technical concepts of the present invention may be implemented in combination with other known technologies or the other technology having functions equivalent to such known technologies.

According to a first aspect of the present invention, a porous honeycomb structure body has cell walls formed in a chemical composition with a principal composition of cordierite composed of 45-55 % by weight of SiO₂, 33-42 % by weight of Al₂O₃ and 12-18 % by weight of MgO. The cell walls have fine pores formed in a distribution in which a fine pore bulk, having pore diameters of 5µm or less, is less than 15% of an entire pore bulk and a fine pore bulk, having pore diameters exceeding 25µm, is less than 10% of the entire pore bulk.

If the fine pore bulk, having the pore diameter of 5µm or less, is 15% or more, then, an issue arises with the occurrence of clogging of the fine pores due to catalyst carried on the cell walls with a resultant increase in pressure loss. On the contrary, if the fine pore bulk, having the pore diameter exceeding 25µm, is 10% or more, then, another issue arises with the occurrence of particulates easily escaping through the fine pores with a resultant drop in capturing efficiency.

Moreover, the pore diameter distribution can be measured by a method of obtaining a pore bulk with a mercury intrusion technique using a porosimeter.

Further, the honeycomb structure body is formed in, for instance, a cylindrically columnar outer profile and has a longitudinal direction along which cell walls extend to form a large number of channels to which exhaust gases are introduced and from which exhaust gases are expelled to the outside.

The outer profile may take the form of not only the cylindrically columnar shape but also a rectangular solid shape or other shapes.

Further, although it is mostly easy for the channels to be formed in squared shapes in cross section, it doesn't matter if the channels are formed in hexagonal shapes, triangular shapes and other shapes.

Further, the cell walls may preferably have porosity in a value ranging from 40 to 60%.

With the porosity specified in such a range, the porous honeycomb structure body can be formed in a structure with increased capturing efficiency and low-pressure loss.

If the porosity is less than 40%, then, there is a risk of an increase occurring in pressure loss. On the contrary, if the porosity exceeds 60%, then, there is a risk of a drop in capturing efficiency. More preferably, the porosity may fall in a value ranging from 45 to 55%.

Furthermore, the cell walls may preferably have a thermal expansion coefficient of 0.7 ×10⁻⁶/°C or less at temperatures ranging from 40 to 800°C.

With the cell walls specified to have such a thermal expansion coefficient, the cell walls have extremely high thermal shock resistance and, hence, no damage occurs on the cell walls even in the repeated occurrences of rapid temperature variations.

If the thermal expansion coefficient of the cell walls at the temperatures ranging from 40 to 800°C exceeds 0.7 ×10⁻⁶/°C, then, there is a risk of deterioration occurring on thermal shock resistance of the cell walls.

According to the second and third aspects of the present invention, a method of manufacturing a porous honeycomb structure body includes molding step, drying step and firing steps as set forth above.

In the molding step, water or the like is added to cordierite-forming raw material to form a mixture that is kneaded. Resulting kneaded raw material is then extrusion molded to form a honeycomb compact body. After extrusion molding the kneaded raw material into a honeycomb shape, the honeycomb compact body is cut in a given length, thereby easily obtaining honeycomb compact bodies each with a desired dimension. This makes it possible to continuously form the honeycomb compact body with a capability of having low expansibility with the occurrence of oriented cordierite crystalline.

Further, in the molding step, not only the cordierite-forming raw material and water are kneaded but also combustible substance or the like may be further added to the cordierite-forming raw material.

Furthermore, for moisture to be evaporated in the drying step, the honeycomb compact body, molded in the molding step mentioned above, may be dried by hot air drying step, microwave drying step, dielectric drying step, reduced-pressure drying step and freeze dehydration step, etc. Among these, in view of a capability of immediately and uniformly drying an entire structure, the hot air drying step and the microwave drying step or the dielectric drying step may be preferably conducted in combination to perform the drying step set forth above. In addition, the drying step may be performed by heating the honeycomb compact body at temperatures of, for instance, approximately 80 to 100°C. A heating time interval may be suitably selected in conformity to a size of the honeycomb compact body, etc.

Moreover, the firing step may be preferably conducted at temperatures of approximately 1300 to 1500°C for 5 to 20 hours under the same condition as that of a firing step of the related art provided that the firing temperature and the firing time interval may be suitably selected depending on the size of the honeycomb compact body, etc.

Besides, the drying step and the firing step may be separately performed but may be collectively performed in a single step with a continuous change in temperature from the drying temperature to the firing temperature.

With the manufacturing method according to the second aspect of the present invention, further, the cordierite-forming material may preferably have a principal composition of talc, molten silica and aluminum hydroxide. A sum of fine particle cumulative frequencies of talc and molten silica having diameters of 8.7µm or less, measured with a particle size distribution analyzer, is selected to be 15% or less. In addition, a sum of coarse particle cumulative frequencies of talc and molten silica having diameters of 31.3µm or more is selected to be 10% or less.

Here, the term "cumulative frequency" will be described below in more detail. The particle size distribution analyzer makes it possible to obtain existence percentage distributions for individual particle diameters and the "cumulative frequency" represents a total sum of such distributions lying at a value of 100%. This can be plotted on a graph with the abscissa axis representing a particle diameter and an ordinate axis representing a frequency (%), thereby making it possible to obtain the cumulative frequency in a range up to a certain particle diameter. A total sum of cumulative frequencies with fine particles having particle diameters less than a targeted particle diameter is defined to be a fine particle cumulative frequency. A total sum of cumulative frequencies with coarse particles having particle diameters greater than the targeted particle diameter is defined to be a coarse particle cumulative frequency.

Further, the expression "the sum of the fine particle cumulative frequencies of talc, having diameters of 8.7µm or less, and the coarse particle cumulative frequency of molten silica having diameters of 8.7µm or less, both measured with the particle size distribution analyzer" refers to a sum of values of talc and molten silica obtained upon taking a product obtained by multiplying a bulk ratio between talc, having the diameters of 8.7µm or less, and molten silica having the diameters of 8.7µm or less by respective cumulative frequencies of talc and molten silica.

Further, the expression "the sum of the coarse particle cumulative frequency of talc having the diameters of 31.3µm or more and the coarse particle cumulative frequency of molten silica having the diameters of 31.3µm or more" refers to a sum that is acquired in the same sequence as that obtained for the cumulative frequencies of the particles having the diameters of 31.3 µm or more.

With the manufacturing method of the third aspect of the present invention, use is made of the cordierite-forming raw material having the principal composition of talc, molten silica and aluminum hydroxide. The sum of the cumulative frequency of talc in fine particles with diameters of 8.7µm or less and the cumulative frequency of molten silica in fine particles with diameters of 6.25µm or less, measured with the particle size distribution analyzer, is set to be 15% or less. The sum of the cumulative frequency of talc in coarse particles of 43.8µm or more and the cumulative frequency of molten silica in coarse particles of 31.3 µm or more is set to be 10% or less.

The expression "the sum of the cumulative frequency of talc in fine particles with diameters of 8.7µm or less and the cumulative frequency of molten silica in fine particles with diameters of 6.25µm or less, both measured with the particle size distribution analyzer" refers to a sum obtained in the same sequence as that mentioned above except for a point in which the targeted particle diameters are different from each other.

Further, the term "the sum of the cumulative frequency of talc in coarse particles with diameters of 43.8µm or more and the cumulative frequency of molten silica in coarse particles with diameters of 31.3µm or more, both measured with the particle size distribution analyzer" refers to a sum obtained in the same sequence as that mentioned above except for a point in which the targeted particle diameters are different from each other.

With the second aspect of the present invention, the particle diameters of talc and molten silica can be controlled on the same standard and management is easy to perform. In this case, if the sum of the fine particle cumulative frequency of talc having diameters of 8.7µm or less and the fine particle cumulative frequency of molten silica having diameters of 8.7µm or less, both measured with the particle size distribution analyzer, exceeds 15%, then, it is likely that the cell walls of the resulting porous honeycomb structure body are formed with a large number of fine pores with pore diameters of 5µm or less. This causes an issue to arise with the occurrence of the fine pores clogging due to catalyst being carried, resulting in an increase in pressure loss. On the contrary, if the sum of the coarse particle cumulative frequency of talc having diameters of 31.3µm or more and the coarse particle cumulative frequency of molten silica having diameters of 31.3µm or more exceeds 10%, then, it is likely that the coarse pores have pore diameters exceeding 25µm. Thus, an issue arises with the occurrence of a defect in which the particulates escape through the coarse pores with a drop in capturing efficiency. Another issue arises with the occurrence of a drop in strength of the cell walls.

The third aspect of the present invention is directed to a method of finely controlling the particle diameters of talc and molten silica on respective standards. In this case, if the sum of the cumulative frequency of talc in fine particles with diameters of 8.7µm or less and the cumulative frequency of molten silica in fine particles with diameters of 6.25µm or less exceeds 15%, then, it is likely that the cell walls of the resulting porous honeycomb structure body have a large number of fine pores with pore diameters of 5µm or less. This causes an issue to arise with the occurrence of the clogging of the fine pores due to catalyst being carried, resulting in an increase in pressure loss. Further, the sum of the cumulative frequency of talc in coarse particles with diameters of 43.8µm or more and the cumulative frequency of molten silica in coarse particles with diameters of 31.3µm or more exceeds 10%, then, it is likely that coarse pores have pore diameters exceeding 25µm. This causes not only an issue to arise with the occurrence of the particulates escaping through the coarse pores with a drop in capturing efficiency but also another issue to arise with the occurrence of a drop in strength of the cell walls.

The fine particles of talc and molten silica can be controlled upon removing the fine particles using airflow classifications. In addition, the coarse particles of talc and molten silica can be controlled upon removing the coarse particles using mesh classifications.

Further, the cordierite-forming raw material may include impurities such as Fe₂O₃, CaO, Na₂O and K₂O, etc.

Here, detailed description will be made of a reason why the porous honeycomb structure body of the first aspect of the present invention can be easily manufactured using the manufacturing methods of the second and third aspect of the present invention.

More particularly, during the firing step, dehydration and contracting reaction occurs in aluminum hydroxide at temperatures in the vicinity of 1200°C, thereby causing fine pores to be formed in the cell walls due to the contraction. At this time point, porosity of the resulting porous honeycomb structure body is nearly determined. In addition, Al₂O₃, created upon dehydration of aluminum hydroxide, forms a framework of cordierite.

Thereafter, upon heating the porous honeycomb structure body at further increased temperatures, talc and silica begin to melt at temperatures in the vicinity of 1300 to 1400°C. When this takes place, molten talc and silica intrude into the fine pores, which are consequently filled. Then, cordierite is formed around the framework at a temperature of 1430°C. Therefore, voids (fine pores) are formed in areas, where talc and silica are present, depending on particle diameters of these constituents, whereby the fine pore diameters are determined.

Thus, it turns out that the porosity is determined with a bulk ratio of aluminum hydroxide and the pore diameters of the fine pores have a correlation with the particle diameters of silica and talc.

That is, a prediction is made that controlling particle diameters of talc and molten silica in raw material makes it possible to control pore diameters of fine pores in cell walls of a honeycomb structure body to be obtained.

The present inventor conducted various experimental tests to obtain the relationship between average particle diameters of talc and molten silica, used for cordierite-forming raw material, and fine pore diameters demonstrating the maximum frequency of occurrence in a distribution of the fine pores in the cell walls. More particularly, particle diameter contraction rates "k" of talc and molten silica were calculated using a formula expressed as (Average Particle Diameter) = (Contraction Rate "k" of Particle Diameter) · (Fine Pore Diameter). As a result, talc had a particle diameter contraction rate of k = 1.75 and silica had a particle diameter contraction rate of k = 1.25.

Upon using the acquired particle diameter contraction rate "k", the tests were conducted to obtain the particle diameters less than 5 · k (µm) regarded to form the fine pores less than the fine pore diameter of 5µm. It was found out that the particle diameters of talc and molten silica, regarded to form the fine pores with sizes less than the fine pore diameter of 5µm, had particle diameters less than 8.75µm and particle diameters less than 6.25µm, respectively.

Further, by using the resulting particle diameter contraction rate "k", tests were conducted to obtain the particle diameters exceeding 25 · k (µm) regarded to form the fine pores with the fine pore diameter exceeding 25µm. It was found out that the particle diameters of talc and molten silica, regarded to form the fine pores with the fine pore diameter exceeding 25µm, had particle diameters exceeding 43.75µm and particle diameters exceeding 31.25µm, respectively.

From the results mentioned above, when controlling the particle diameters of talc and molten silica on the same standard in a simplified form, the second aspect of the present invention is established. Further, when controlling the particle diameters of talc and molten silica in further fine degrees enables the third aspect of the present invention to be established.

With the second and third aspects of the present invention, talc may preferably have an average particle diameter greater than that of molten silica.

As set forth above, it is likely that talc is formed with fine pores at a lower temperature that at which the fine pores are formed in molten silica. Therefore, after talc is molten, the fine pores, initially formed in the areas where talc is present, are influenced with a melting state of molten silica exposed to high temperatures, thereby causing the fine pores to be formed in small size. Therefore, preliminarily allowing talc to have an average particle diameter greater than that of molten silica results in a capability of forming fine pores in appropriate sizes.

Further, molten silica may preferably have at least one of a spherical shape or a fractured shape.

Molten silica tends to be molten into base material at a high temperature range even in a temperature range in which cordierite is formed. This allows a last substance to form shapes of the fine pores. In addition, the spherical shape or the fractured shape of molten silica is effective because the fine pore diameters can be easily controlled.

### [First Embodiment]

A porous honeycomb structure body of one embodiment according to the present invention and a method of manufacturing the same are described below with reference to the accompanying drawings.

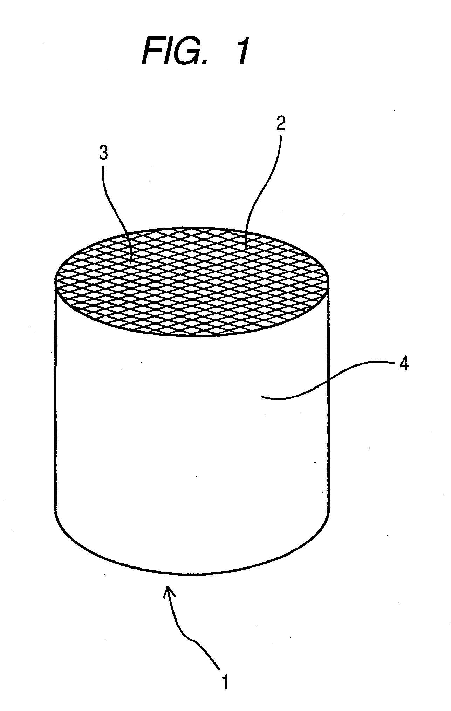

As shown in FIG. 1, the porous honeycomb structure body 1 of the present embodiment takes the form of a structure including honeycomb shaped cell walls 2, a large number of cells 3 surrounded with the honeycomb shaped cell walls 2, and a cylindrical outer skin 4.

The cell walls 2 are composed of material having a principal composition of cordierite having a chemical composition of 45-55 % by weight of SiO₂, 33-42 % by weight of Al₂O₃ and 12-18 % by weight of MgO. The cell walls 2 have fine pores formed in a distribution in which a fine pore bulk with pore diameters of 5µm or less is less than 15% of an entire pore bulk and a fine pore bulk with pore diameters exceeding 25µm is less than 10% of the entire pore bulk.

A detail of such a structure will be described below in detail.

In manufacturing the porous honeycomb structure body 1, first, cordierite raw materials of 26 kinds (involving raw materials Nos. 1 to 26) were prepared including 35.4 % by mass of talc, 19.4 % by mass of molten silica and 45.2 % by mass of aluminum hydroxide.

Cordierite-forming raw material was used containing aluminum hydroxide as raw material with an average particle diameter of 5µm.

Further, talc and molten silica were used with particle diameters indicated on Tables 1 and 2.

Thereafter, the cordierite-forming raw material and combustible substance were mixed at a mixing ratio indicated on Table 3 to provide a mixture, to which water was added in an amount indicated on Table 3 and kneaded, thereby obtaining slurries of 26 kinds.

**[Table 1]**

| Test Piece No. | Cumulative Frequency of Fine Particles in Cordierite-Forming Raw Material | | | Cumulative Frequency of Coarse Particles in Cordierite-Forming Raw Material | | |
|---|---|---|---|---|---|---|
| | Talc | Molten Silica | Sum | Talc | Molten Silica | Sum |
| | Cumulative Frequency of Fine Particles of 8.75µm or Less (%) | Cumulative Frequency of Fine Particles of 8.75µm or Less (%) | | Cumulative Frequency of Fine Particles of 31.25µm or More (%) | Cumulative Frequency of Fine Particles of 31.25µm or More (%) | |
| Raw Material 1 | 0.0 | 0.0 | 0.0 | 0.0 | 0.0 | 0.0 |
| Raw Material 2 | 4.5 | 0.0 | 4.5 | 0.0 | 1.1 | 1.1 |
| Raw Material 3 | 4.5 | 2.0 | 6.5 | 1.5 | 1.6 | 3.1 |
| Raw Material 4 | 4.5 | 4.0 | 8.5 | 3.0 | 2.1 | 5.1 |
| Raw Material 5 | 9.0 | 0.0 | 9.0 | 0.0 | 2.2 | 2.2 |
| Raw Material 6 | 9.0 | 2.0 | 11.0 | 1.5 | 2.7 | 4.2 |
| Raw Material 7 | 9.0 | 4.0 | 13.0 | 3.0 | 3.2 | 6.2 |
| Raw Material 8 | 13.6 | 0.0 | 13.6 | 0.0 | 3.3 | 3.3 |
| Raw Material 9 | 13.6 | 2.0 | 15.6 | 1.5 | 3.8 | 5.3 |
| Raw Material 10 | 13.6 | 4.0 | 17.6 | 3.0 | 4.3 | 7.3 |
| Raw Material 11 | 18.1 | 0.0 | 18.1 | 0.0 | 4.5 | 4.5 |
| Raw Material 12 | 18.1 | 2.0 | 20.1 | 1.5 | 5.0 | 6.5 |
| Raw Material 13 | 18.1 | 4.0 | 22.1 | 3.0 | 5.4 | 8.4 |

**[Table 2]**

| Test Piece No. | Cumulative Frequency of Fine Particles in Cordierite-Forming Raw Material | | | Cumulative Frequency of Coarse Particles in Cordierite-Forming Raw Material | | |
|---|---|---|---|---|---|---|
| | Talc | Molten Silica | Sum | Talc | Molten Silica | Sum |
| | Cumulative Frequency of Fine Particles of 8.75µm or Less (%) | Cumulative Frequency of Fine Particles of 6.25µm or Less (%) | | Cumulative Frequency of Fine Particles of 43.75µm or More (%) | Cumulative Frequency of Fine Particles of 31.25µm or More (%) | |
| Raw Material 14 | 0.0 | 0.0 | 0.0 | 0.0 | 0.0 | 0.0 |
| Raw Material 15 | 4.5 | 0.0 | 4.5 | 3.8 | 0.0 | 3.8 |
| Raw Material 16 | 4.5 | 2.2 | 6.7 | 3.8 | 1.5 | 5.3 |
| Raw Material 17 | 4.5 | 4.4 | 8.9 | 3.8 | 3.0 | 6.8 |
| Raw Material 18 | 9.0 | 0.0 | 9.0 | 6.0 | 0.0 | 6.0 |
| Raw Material 19 | 9.0 | 2.2 | 11.2 | 6.0 | 1.5 | 7.5 |
| Raw Material 20 | 9.0 | 4.4 | 13.4 | 6.0 | 3.0 | 9.0 |
| Raw Material 21 | 13.6 | 0.0 | 13.6 | 9.0 | 0.0 | 9.0 |
| Raw Material 22 | 13.6 | 2.2 | 15.8 | 9.0 | 1.5 | 10.5 |
| Raw Material 23 | 13.6 | 4.4 | 18.0 | 9.0 | 3.0 | 12.0 |
| Raw Material 24 | 18.1 | 0.0 | 18.1 | 11.3 | 0.0 | 11.3 |
| Raw Material 25 | 18.1 | 2.2 | 20.3 | 11.3 | 1.2 | 12.5 |
| Raw Material 26 | 18.1 | 4.4 | 22.5 | 11.3 | 3.0 | 14.3 |

**[Table 3]**

| Materials | | Blending Ratio | |
|---|---|---|---|
| Cordierite-Forming Raw Material | Talc | 35.4 % by mass | 100 Parts by Weight |
| | Molten Silica | 19.4 % by mass | |
| | Aluminum Hydroxide | 45.2 % by mass | |
| | Methylcellulose | - | 6.1 Parts by Weight |
| | Lubricant | - | 3.2 Parts by Weight |
| Water | | - | 27.7 Parts by Weight |

Thereafter, in molding step, the resulting slurry was fed to a known honeycomb extrusion molding machine for extrusion molding to form a compact body, which was then cut into compact bodies each with a given desired length.

Then, in drying step, the resulting compact bodies were placed in a microwave oven to evaporate water by a value of 80% or more, after which the compact bodies were dried by hot air at a temperature of 80°C for 12 hours.

Subsequently, in firing step, dried compact bodies were fired at a temperature of 1420°C for 20 hours, thereby obtaining the honeycomb structure bodies 1 (test pieces Nos. E1 to E16 and test pieces Nos. C1 to C10) each with a structure, shown in FIG. 1, which had a size of ϕ140 × 220mm with a wall thickness of 15MIL and mesh #250.

Next, all of the resulting honeycomb structure bodies of 26 kinds were measured to check pore diameter distributions and thermal expansion coefficients.

The pore diameter distributions were measured using a mercury intrusion technique using a porosimeter. The measured fire pore distributions were used for calculating bulk ratios each with fine pores of 5 µm or less and bulk ratios each with fine pores of 25 µm or more. The results are indicated on Table 4.

Further, the thermal expansion coefficients were measured using a thermal dilatometer. The result on the thermal expansion coefficients is indicated on Table 4 in combination with the fine pore distributions.

**[Table 4]**

| Test Piece No. | Cordierite-Forming Raw Material | Distribution of Fine Pores in Cell Walls | | | | Thermal Expansion Coefficient |
|---|---|---|---|---|---|---|
| | | Pore Bulk Ratio of Fine Pores with Diameters of 5µm or less | <15% | Pore Bulk Ratio of Fine Pores with Diameters Exceeding 25µm | <10% | ×10⁻⁵ (1/°C) |
| E1 | Raw Material | 0.0 | ○ | 0.0 | ○ | 0.2 |
| E2 | Raw Material | 4.5 | ○ | 1.1 | ○ | 0.2 |
| E3 | Raw Material | 6.0 | ○ | 3.0 | ○ | 0.2 |
| E4 | Raw Material | 7.5 | ○ | 4.8 | ○ | 0.2 |
| E5 | Raw Material | 9.0 | ○ | 2.2 | ○ | 0.2 |
| E6 | Paw Material 6 | 10.5 | ○ | 4.1 | ○ | 0.2 |
| E7 | Raw Material | 12.0 | ○ | 5.9 | ○ | 0.2 |
| E8 | Raw Material 8 | 13.6 | ○ | 3.3 | ○ | 0.2 |
| C1 | Raw Material 9 | 15.0 | × | 5.2 | ○ | 0.2 |
| C2 | Raw Material 10 | 16.5 | × | 7.1 | ○ | 0.3 |
| C3 | Raw Material 11 | 18.1 | × | 4.5 | ○ | 0.3 |
| C4 | Raw Material 12 | 19.6 | × | 6.3 | ○ | 0.3 |
| C5 | Raw Material 13 | 21.0 | × | 8.2 | ○ | 0.3 |
| E9 | Raw Material 14 | 0.0 | ○ | 0.0 | ○ | 0.2 |
| E10 | Raw Material 15 | 42 | ○ | 3.7 | ○ | 0.2 |
| E11 | Raw Material 16 | 6.8 | ○ | 5.2 | ○ | 0.2 |
| E12 | Raw Material 17 | 9.0 | ○ | 6.7 | ○ | 0.2 |
| E13 | Raw Material 18 | 8.9 | ○ | 5.9 | ○ | 0.2 |
| E14 | Raw Material 19 | 11.2 | ○ | 7.4 | ○ | 0.2 |
| E15 | Raw Material 20 | 13.6 | ○ | 9.1 | ○ | 0.2 |
| E16 | Raw Material 21 | 14.0 | ○ | 9.0 | ○ | 0.2 |
| C6 | Raw Material 22 | 15.8 | × | 10.3 | × | 0.2 |
| C7 | Raw Material 23 | 18.2 | × | 11.9 | × | 0.3 |
| C8 | Raw Material 24 | 18.3 | × | 12.0 | × | 0.3 |
| C9 | Raw Material 25 | 20.3 | × | 12.8 | × | 0.3 |
| C10 | Raw Material 26 | 22.4 | × | 14.1 | × | 0.3 |

As will be understood from Table 4, the test pieces E1 to E8 represent the honeycomb structure bodies obtained by conducting the molding step, the drying step and the firing step upon using the cordierite-forming material. The cordierite-forming material had a value of 15% or less in a sum of a fine particle cumulative frequency of talc with diameters of 8.7µm or less and a fine particle cumulative frequency of molten silica with diameters of 8.7µm or less, both of which were measured with the particle size distribution analyzer, and a value of 10% or less in a sum of a coarse particle cumulative frequency of talc with diameters of 31.3 µm or more and a coarse particle cumulative frequency of molten silica with diameters of 31.3µm or more. It is understood that these honeycomb structure bodies had the cell walls with the fine pores formed in a distribution having a pore bulk with pore diameters of 5µm or less is less than 15% of the entire pore bulk and a pore bulk with pore diameters exceeding 25µm of less than 10% of the entire pore bulk wherein the fine pores with the pore diameters falling in a narrow range of 5 to 25% are formed at an extremely high rate.

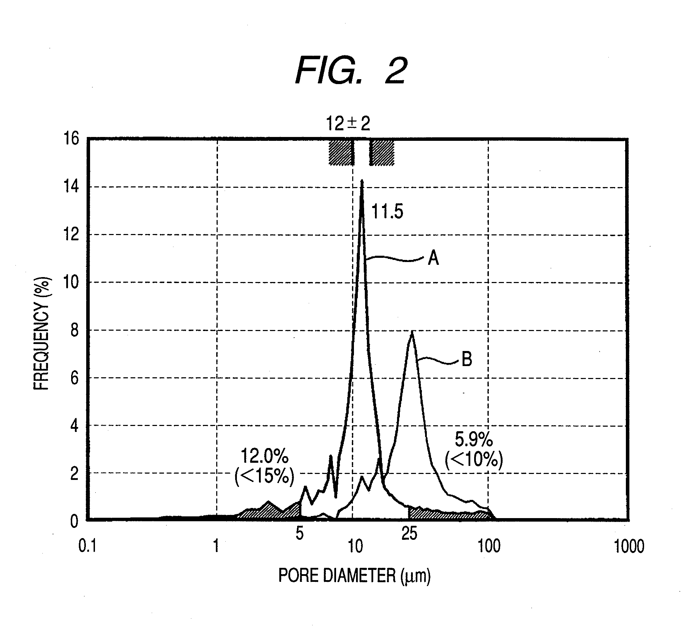

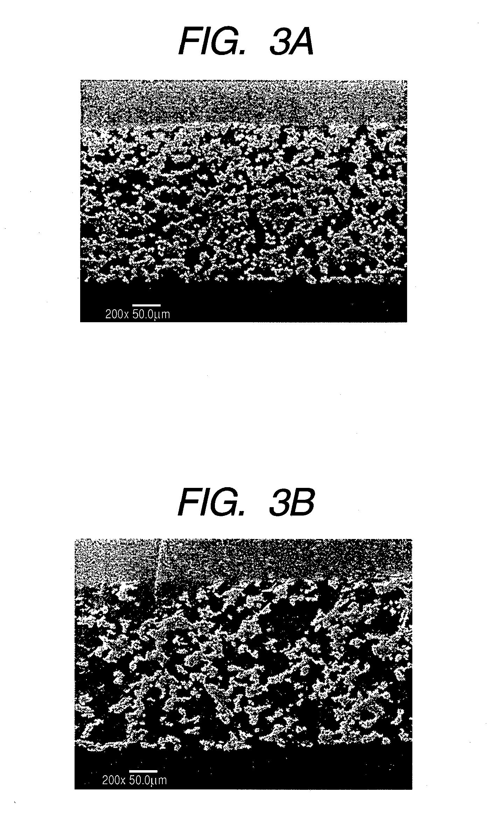

FIG. 2 shows a pore diameter distribution (in a distribution curve A) of the fine pores formed in the cell walls of the test piece E7 and FIG. 3A shows a microstructure of the relevant honeycomb structure body in cross section.

As will be understood from Table 4, meanwhile, the test pieces C1 to C5 were the honeycomb structure bodies obtained by a method including the molding step, the drying step and the firing step with the use of the cordierite-forming material having a principal composition of talc, molten silica and aluminum hydroxide. The cordierite-forming material had a value exceeding 15% in a sum of a fine particle cumulative frequency of talc with diameters of 8.7µm or less and a fine particle cumulative frequency of molten silica with diameters of 8.7µm or less, both of which were measured with the particle size distribution analyzer, and a value of 10% or less in a sum of a coarse particle cumulative frequency of talc with diameters of 31.3µm or more and a coarse particle cumulative frequency of molten silica with diameters of 31.3µm or more. It is understood that these honeycomb structure bodies had the cell walls with the fine pores formed in a distribution having a pore bulk with pore diameters of 5µm or less is 15% or more of an entire pore bulk and/or a pore bulk with pore diameters exceeding 25µm is less than 10% of the entire pore bulk.

For comparison purposes, FIG. 2 shows a pore diameter distribution (in a distribution curve B) of fine pores formed in the cell walls of the test cell prepared by a method simulated on the related art disclosed in Patent Publication 1 and FIG. 3B shows a microstructure of the relevant honeycomb structure body.

As will be understood from Table 4, further, the test pieces E9 to E16 were the honeycomb structure bodies obtained by the method including the molding step, the drying step and the firing step with the use of the cordierite-forming material having a principal composition of talc, molten silica and aluminum hydroxide. The cordierite-forming material had a value of 15% or less in a sum of a fine particle cumulative frequency of talc with diameters of 8.7µm or less and a fine particle cumulative frequency of molten silica with diameters of 6.25µm or less, both of which were measured with the particle size distribution analyzer, and a value of 10% or less in a sum of a coarse particle cumulative frequency of talc with diameters of 43.8µm or more and a coarse particle cumulative frequency of molten silica with diameters of 31.3µm or more. It is understood that these honeycomb structure bodies had the cell walls with the fine pores formed in a distribution having a pore bulk with pore diameters of 5µm or less is less than 15% of an entire pore bulk and a pore bulk with pore diameters exceeding 25µm is less than 10% of the entire pore bulk wherein the fine pores with the pore diameters falling in a narrow range of 5 to 25% are formed at an extremely high rate.

As will be understood from Table 4, furthermore, the test pieces C6 to C10 were the honeycomb structure bodies obtained by the method including the molding step, the drying step and the firing step with the use of the cordierite-forming material having a principal composition of talc, molten silica and aluminum hydroxide. The cordierite-forming material had a value exceeding 15% in a sum of a fine particle cumulative frequency of talc with diameters of 8.7µm or less and a fine particle cumulative frequency of molten silica with diameters of 6.25µm or less, both of which were measured with the particle size distribution analyzer, and a value exceeding 10% in a sum of a coarse particle cumulative frequency of talc with diameters of 43.8µm or more and a coarse particle cumulative frequency of molten silica with diameters of 31.3µm or more. It is understood that these honeycomb structure bodies had the cell walls with the fine pores formed in a distribution having a pore bulk with pore diameters of 5µm or less is of 15% or more of an entire pore bulk and a pore bulk with pore diameters exceeding 25µm is a value of 10% or more of the entire pore bulk.

Subsequently, the test piece E7 was treated to carry catalyst and test was conducted to capture particulates exhausted from a diesel engine to check a value on Soot Mass Limit (the maximum amount of PM sediment) and resulting pressure loss. The resulting maximum amount of PM sediment favorably demonstrated a value of 8.6g/L in contrast to a target value greater than 6g/L. In addition, the pressure loss favorably had a result of 10.5kPa in contrast to a target value less than 12kPa (at 2.5m³/min with PM: 5.0g/L).

According to the present invention, thus, it is found out that a porous honeycomb structure body can be manufactured with a structure having an increased efficiency of capturing particulate matter (particulates) while preventing the pressure loss from increasing due to the clogging of the fine pores.

While the specific embodiments of the present invention have been described in detail, it will be appreciated by those skilled in the art that various modifications and alternatives to those details could be developed in light of the overall teachings of the disclosure. Accordingly, the particular arrangements disclosed are meant to be illustrative only and not limited to the scope of the present invention, which is to be given the full breadth of the following claims and all equivalents thereof.

A porous honeycomb structure body, having honeycomb shaped cell walls and a large number of cells surrounded with the honeycomb shaped cell walls, and a related manufacturing method are disclosed. The cell walls have a principal composition of cordierite in a chemical composition of 45-55 % by weight of SiO₂, 33-42 % by weight of Al₂O₃ and 12-18 % by weight of MgO. The cell walls have fine pores formed in a distribution under which a fine pore bulk, having pore diameters of 5µm or less, is less than 15% of an entire pore bulk and a fine pore bulk, having pore diameters exceeding 25µm, is less than 10% of the entire pore bulk. The porous honeycomb structure body has porosity ranging from 40 to 60% and has a thermal expansion coefficient of 0.7 × 10⁻⁶/°C or less at temperatures ranging from 40 to 800°C.

## Claims

1. A porous honeycomb structure body having honeycomb shaped cell walls and a large number of cells surrounded with the honeycomb shaped cell walls,
**characterized in that:**
the cell walls have a principal composition of cordierite composed of 45-55 % by weight of SiO₂, 33-42 % by weight of Al₂O₃ and 12-18 % by weight of MgO; and
the cell walls have fine pores formed in a distribution in which the proportion of pores having diameter of 5µm or less, is less than 15% of the total pores, and a fine pore bulk, having pore diameters exceeding 25µm, is less than 10% of the entire pore bulk.

2. The porous honeycomb structure body according to claim 1, **characterized in that:**
the cell walls have a porosity in a value ranging from 40 to 60%.

3. The porous honeycomb structure body according to claim 1, **characterized in that:**
a thermal expansion coefficient of 0.7 × 10⁻⁶/°C or less at temperatures ranging from 40 to 800°C.

4. A method of manufacturing the porous honeycomb structure body according to claim 1, the method **characterized by** the steps of:
extrusion molding a cordierite-forming material to form the honeycomb structure body;
drying the honeycomb structure body; and
firing the honeycomb structure body;
wherein the cordierite-forming material has a principal composition of talc, molten silica and aluminum hydroxide; a sum of a cumulative frequency of talc in fine particles of 8.7µm or less and the percentage of molten silica in fine particles of 8.7µm or less, measured with a particle size distribution analyzer, is 15% or less; and a sum of a cumulative frequency of talc in coarse particles of 31.3µm or more and the percentage of molten silica in coarse particles of 31.3µm or more is 10% or less.

5. A method of manufacturing the porous honeycomb structure body according to claim 1, the method **characterized by** the steps of:
extrusion molding cordierite-forming material to form the honeycomb structure body;
drying the honeycomb structure body; and
firing the honeycomb structure body;
wherein the cordierite-forming material has a principal composition of talc, molten silica and aluminum hydroxide; a sum of a cumulative frequency of talc in fine particles of 8.7µm or less and the percentage of molten silica in fine particles of 6.25µm or less, measured with a particle size distribution analyzer, is 15% or less; and a sum of a cumulative frequency of talc in coarse particles of 43.8µm or more and the percentage of molten silica in coarse particles of 31.3µm or more is 10% or less.

6. The method of manufacturing the porous honeycomb structure body according to claims 4 or 5, **characterized in that**:
talc has an average particle diameter greater than that of molten silica.

7. The method of manufacturing the porous honeycomb structure body according to any one of claims 4 to 6, **characterized in that**:
molten silica has at least one of a spherical shape or a fractured shape.
